Europäisches Patentamt

**European Patent Office**

**Office européen des brevets**

(11) Numéro de publication: **0 263 091 B1**

(12) **FASCICULE DE BREVET EUROPEEN**

(45) Date de publication de fascicule du brevet: **06.05.92** (51) Int. Cl.⁵: **A23G 1/04**, A47J 17/02

(21) Numéro de dépôt: **87870076.4**

(22) Date de dépôt: **05.06.87**

(54) **Racloir pour la préparation de raclures, plus particulièrement de raclures de chocolat.**

(30) Priorité: **11.06.86 BE 904901**

(43) Date de publication de la demande:
**06.04.88 Bulletin 88/14**

(45) Mention de la délivrance du brevet:
**06.05.92 Bulletin 92/19**

(84) Etats contractants désignés:
**DE FR IT LU NL**

(56) Documents cités:
BE-A- 781 261      BE-A- 784 302
CH-A- 401 658      DE-A- 2 623 514
DE-A- 3 336 481    FR-A- 2 611 442
GB-A- 233 688      GB-A- 728 322
GB-A- 2 164 839    US-A- 3 922 130

(73) Titulaire: **RO-DES bvba**
**Tulpenlaan 227**
**B-8740 Deerlijk(BE)**

(72) Inventeur: **Desmet, Roger**
**Tulpenlaan 227**
**B-8740 Deerlijk(BE)**

(74) Mandataire: **Dopchie, Jean-Marc**
**KORTRIJKS OCTROOI- EN MERKENBUREAU -**
**K.O.B. Kennedypark 21c**
**B-8500 Kortrijk(BE)**

# Description

L'invention a pour objet un racloir qui permet d'obtenir d'une manière simple des raclures à partir d'une matière solide.

L'invention a plus particulièrement pour objet un racloir qui permet d'obtenir des raclures à partir d'un bloc de chocolat solide.

De telles raclures de chocolat sont employées pour la préparation de mets, plus particulièrement dans la préparation et la décoration de pâtisserie. Le pâtissier qui a besoin de telles raclures peut jusqu'à aujourd'hui difficilement les préparer lui-même, surtout s'il n'a besoin que de petites quantités par jour ou par semaine. Une méthode connue pour la réalisation de telles raclures consiste à verser sur un bloc en marbre froid une certaine quantité de chocolat fondu, après quoi, à partir de la mince couche de chocolat solidifié, il est possible d'arracher des raclures à l'aide d'une spatule. Cette méthode est toutefois compliquée et demande beaucoup d'opérations préparatoires et d'entretien.

Une alternative connue à cette méthode est celle où le pâtissier utilise un appareil relativement coûteux qui transforme en raclures les blocs de chocolat tels qu'il les achète. Cet appareil est toutefois moins indiqué pour le pâtissier qui n'a besoin que de petites quantités de raclures. Une autre alternative est celle où le pâtissier achète des raclures de chocolat prêtes à l'emploi. Ces raclures sont toutefois de moindre qualité, par exemple parce qu'elles s'effritent et se cassent pendant le transport.

Le but de l'invention est d'offrir une alternative aux possibilités susdites afin d'obtenir des raclures, plus particulièrement des raclures de chocolat, grâce à un racloir qui permet d'obtenir de manière simple et rapide de grandes raclures à partir d'une matière solide.

Le racloir selon l'invention est caractérisé par une lame dont au moins un des longs côtés décrit une courbe, dont les extrémités sont reliées chacune avec une structure portante par une suspension à double charnière dans la direction longitudinale de la lame, et dont le milieu est relié à l'aide d'éléments ressorts avec la structure portante de manière telle que la distance entre ce milieu et la structure portante est variable et que la lame est arquée sur sa longueur dans la position de repos.

Le racloir selon l'invention peut être réalisé suivant différentes formes d'exécution. A titre d'exemple, il sera donné ci-après une description détaillée de deux formes d'exécution possibles d'un dispositif selon l'invention. Cette description renvoie aux figures ci-jointes où :

La Fig. 1 est une vue en perspective du racloir selon l'invention ;

La Fig. 2 est une vue schématique d'en haut du racloir selon l'invention ;

La Fig. 3 est une coupe schématique du racloir selon l'invention.

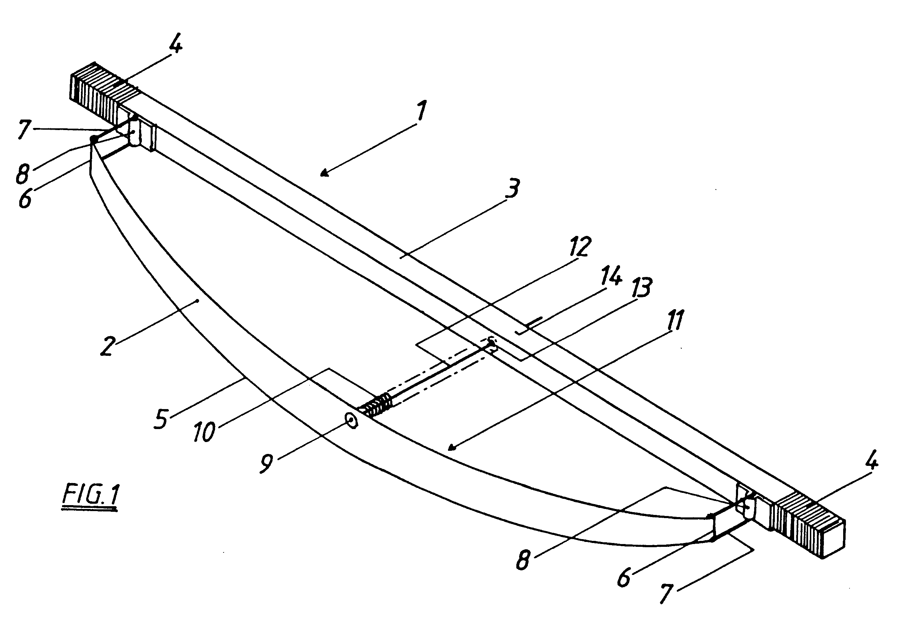

Le racloir selon l'invention se compose essentiellement de deux parties : la structure portante (1) et la lame (2). Dans la forme d'exécution reproduite dans les figures, la structure portante (1) consiste en une barre (3) aux extrémités de laquelle sont prévues des poignées (4). La lame (2) est un ruban de forme oblongue réalisé de préférence en métal avec un côté arqué convexe (5). Cette lame (2) est reliée par chacune de ses extrémités (6) en charnière avec une pièce de raccord (7) reliée à son tour en charnière avec la barre (3). La distance entre les points de connexion en charnière (8) des pièces de raccord (7) et la barre (3) est inférieure à la longueur de la lame (2). Entre le milieu (9) de la lame (2) et la barre (3) se trouve un ressort (10) qui, par son action, repousse ce milieu (9) de la barre (3) en sorte que la lame (2) est suspendue arquée vers l'extérieur. Pour relier la lame (2) de manière stable avec la barre (3), la lame (2) est pourvue près du milieu (9) de son côté intérieur (11) d'une barre de guidage (12). La barre (12) est située à l'intérieur du ressort (10) et entre par une ouverture (13) dans le milieu (14) entre les deux points de connexion (8) de la barre (3), figures 1 et 2.

Le racloir selon l'invention permet d'obtenir les raclures directement à partir du bloc de chocolat tel qu'il est acheté par le pâtissier. Dans ce but, le bloc est posé sur un plan de travail de façon à ce qu'il ne puisse glisser hors de portée de l'opérateur. L'opérateur saisit le racloir selon l'invention des deux mains, à l'aide des poignées (4) avec la lame (2) du côté opposé à lui. Il pose la lame (2) avec son côté arqué (5) sur la surface supérieure du chocolat et pousse le racloir loin de lui en le comprimant en oblique contre la surface du chocolat. Grâce à la suspension à ressort et charnière de la lame (2), on obtient de grandes raclures.

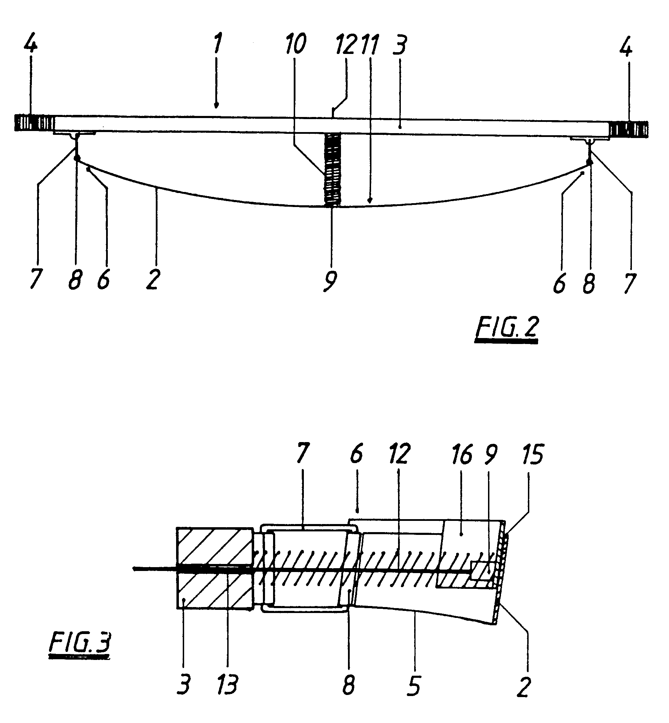

La lame (2) est fixée de préférence en montée dans le racloir selon l'invention. La partie supérieure (15) de la lame (2) est alors la plus éloignée de la barre (3) tandis que la partie arquée (5) se trouve la plus proche de la barre (3), figure 3. Cette inclinaison facilite la manipulation. La lame (2) peut aussi être glissée dans un support (16). Ce support (16) est relié de manière fixe avec la barre de guidage (12) et en charnière avec les pièces de connexion (7).

L'invention n'est nullement limitée à la forme d'exécution décrite ci-dessus et reproduite dans les figures. Tant la structure portante (1) que la connexion à ressort et charnière entre la lame et la structure portante (1) peuvent être exécutées de façon différente.

## Revendications

1. Racloir pour la préparation de raclures, plus particulièrement pour la préparation de raclures de chocolat, caractérisé par une lame dont les extrémités sont reliées chacune avec une structure portante par l'entremise d'une suspension à double charnière dans la direction longitudinale de la lame, et dont le milieu est relié par des ressorts à la structure portante de façon telle que la distance entre ce milieu et la structure portante est variable et que la lame est arquée sur sa longueur à l'état de repos.

2. Racloir selon la revendication 1, caractérisé par un ressort à pression entre la lame et la structure portante.

3. Racloir selon une des revendications précédentes, caractérisé par des moyens de guidage qui limitent le mouvement du milieu de la lame à la direction suivant la ligne qui passe par le milieu de la lame et de la structure portante.

4. Racloir selon la revendication 3, caractérisé par une barre située à l'intérieur du ressort à pression, qui est reliée de manière fixe avec la lame et qui entre par une ouverture dans la structure portante.

5. Racloir selon une des revendications précédentes, caractérisé par deux pièces de connexion qui sont chacune reliées d'un côté en charnière avec une extrémité de la lame et de l'autre côté en charnière avec la structure portante.

6. Racloir selon une des revendications précédentes, caractérisé en ce que la structure portante est une barre.

7. Racloir selon une des revendications précédentes, caractérisé en ce que au moins un des long côtés de la lame est convexe.

8. Racloir selon une des revendications précédentes, caractérisé en ce que la lame est suspendue en montant vers l'avant.

9. Racloir selon une des revendications précédentes, caractérisé en ce que la lame est suspendue par l'entremise d'un support à la structure portante.

## Claims

1. Scraper for the preparation of scrolls, more particularly for the preparation of chocolate scrolls, characterised by a blade whose ends are each connected with a carrying structure by means of the intervention of a double-hinged suspension in the longitudinal direction of the blade, and whose centre is connected to the carrying structure by springs in such a manner that the distance between this centre and the carrying structure is variable and such that the blade is arched over its length in the rest position.

2. Scraper according to Claim 1, characterised by a pressure spring between the blade and the carrying structure.

3. Scraper according to one of the preceding claims, characterised by guide means which limit the movement of the centre of the blade in the direction of the line which passes via the centre of the blade and of the carrying structure.

4. Scraper according to Claim 3, characterised by a bar located inside the pressure spring, which is connected in a secure manner to the blade and which enters the carrying structure via an opening.

5. Scraper according to one of the preceding claims, characterised by two connection pieces which are each connected on one side in the form of a hinge with an end of the blade and on the other side in the form of a hinge with the carrying structure.

6. Scraper according to one of the preceding claims, characterised in that the carrying structure is a bar.

7. Scraper according to one of the preceding claims, characterised in that at least one of the long sides of the blade is convex.

8. Scraper according to one of the preceding claims, characterised in that the blade is suspended so that it rises towards the front.

9. Scraper according to one of the preceding claims, characterised in that the blade is suspended from the carrying structure by means of the intervention of a support.

**Patentansprüche**

1. Schabhobel zur Herstellung von Schabseln, insbesondere zur Herstellung von Schokoladeraspeln,
**GEKENNZEICHNET** durch eine Klinge, deren Enden jeweils mit einer Tragkonstruktion unter Zwischenschaltung einer Doppelgelenksaufhängung in Längsrichtung der Klinge verbunden ist, und deren Mitte mittels Federn mit der Tragkonstruktion so verbunden ist, daß der Abstand zwischen dieser Mitte und der Tragkonstruktion veränderlich ist und die Klinge im Ruhestand über ihre gesamte Länge gebogen ist.

2. Schabhobel nach Anspruch 1,
**GEKENNZEICHNET** durch eine Druckfeder zwischen der Klinge und der Tragkonstruktion.

3. Schabhobel nach einem der vorhergehenden Ansprüche,
**GEKENNZEICHNET** durch Führungsmittel, welche die Bewegung der Mitte der Klinge in die Richtung entlang der Linie begrenzen, welche durch die Mitte der Klinge und die Tragkonstruktion verläuft.

4. Schabhobel nach Anspruch 3,
**GEKENNZEICHNET** durch eine Stange im Inneren der Druckfeder, die fest mit der Klinge verbunden ist und durch eine Öffnung in die Tragkonstruktion geführt ist.

5. Schabhobel nach einem der vorhergehenden Ansprüche,
**GEKENNZEICHNET** durch zwei Verbindungsteile, die jeweils auf einer Seite gelenkig mit einem Ende der Klinge und auf der anderen Seite gelenkig mit der Tragkonstruktion verbunden sind.

6. Schabhobel nach einem der vorhergehenden Ansprüche,
**dadurch GEKENNZEICHNET**, daß die Tragkonstruktion eine Stange ist.

7. Schabhobel nach einem der vorhergehenden Ansprüche,
**dadurch GEKENNZEICHNET,** daß mindestens eine der Längsseiten der Klinge konvex ausgebildet ist.

8. Schabhobel nach einem der vorhergehenden Ansprüche,
**dadurch GEKENNZEICHNET**, daß die Klinge nach vorn ansteigend aufgehängt ist.

9. Schabhobel nach einem der vorhergehenden Ansprüche,
**dadurch GEKENNZEICHNET**, daß die Klinge unter Zwischenschaltung eines Stützelementes an der Tragkonstruktion aufgehängt ist.

FIG.1

EP 0 263 091 B1

FIG. 2

FIG. 3